(19) Europäisches Patentamt / European Patent Office / Office européen des brevets

(11) **EP 2 827 169 B1**

(12) **FASCICULE DE BREVET EUROPEEN**

(45) Date de publication et mention
de la délivrance du brevet:
**28.10.2020 Bulletin 2020/44**

(51) Int Cl.:
***G01S 5/14*** *(2006.01)*     ***B01F 15/00*** *(2006.01)*

(21) Numéro de dépôt: **14173832.8**

(22) Date de dépôt: **25.06.2014**

(54) **Procédé d'instrumentation d'un contenant destiné à être mis en mouvement en particulier pour malaxer un ensemble de matériaux**

Instrumentierungsverfahren eines Behälters, der dazu bestimmt ist, in Bewegung gesetzt zu werden, insbesondere zum Kneten einer Gesamtheit von Materialien

Method for installing instruments in a container intended for being placed in motion, in particular for mixing a group of materials

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 FR 1356180**

(43) Date de publication de la demande:
**21.01.2015 Bulletin 2015/04**

(73) Titulaire: **COMMISSARIAT À L'ÉNERGIE ATOMIQUE ET AUX ÉNERGIES ALTERNATIVES**
**75015 Paris (FR)**

(72) Inventeurs:
- **Carmona, Mikaël**
 **38570 Tencin (FR)**
- **Blanpain, Roland**
 **38380 Entre-Deux-Guiers (FR)**

(74) Mandataire: **Novaimo**
**Europa 1**
**362, avenue Marie Curie**
**Archamps Technopole**
**74166 Saint Julien-en-Genevois Cedex (FR)**

(56) Documents cités:
**US-A1- 2009 037 026**     **US-A1- 2011 004 344**
**US-B1- 6 227 039**

## Description

### Domaine technique de l'invention

L'invention concerne le domaine du traitement des matériaux en particulier grâce au suivi du positionnement d'une balise, ou élément communicant, disposé dans un contenant instrumenté.

L'invention a pour objet plus particulièrement un procédé d'instrumentation d'un contenant, notamment destiné à recevoir un ensemble de matériaux formant par exemple un béton ou un mortier.

### État de la technique

Dans le domaine des matériaux, et notamment du béton, il peut être primordial de contrôler la qualité du, ou des, matériaux disposés dans un contenant avantageusement en mouvement.

Dans l'exemple particulier du béton, ce dernier comporte un granulat généralement formé par un ensemble de sables, graviers, cailloux. Le béton est fabriqué dans une usine spécialisée où il est contrôlé avant son départ dans un camion toupie en direction d'un chantier où il doit être coulé. Il est important que le béton conserve une qualité proche de la sortie d'usine malgré son transport. Pour cela, il est connu de constater visuellement la qualité du béton et, le cas échéant de rajouter de l'eau.

Il résulte donc un besoin de faciliter et d'automatiser un tel contrôle.

Le document US2009/037026 décrit un véhicule équipé d'une toupie et muni d'un capteur permettant de mesurer la vitesse de rotation de la toupie.

### Objet de l'invention

Le but de la présente invention est de proposer une solution permettant d'instrumenter un contenant en vue de localiser un élément à l'intérieur du contenant ou d'en contrôler le contenu.

On tend vers ce but notamment grâce à un procédé de surveillance d'au moins un objet électronique selon la revendication 1. Des mises en œuvre préférentielles de ce procédé sont définies dans les revendications dépendantes 2-13.

L'invention est aussi relative à un dispositif selon la revendication 14 configuré pour la mise en œuvre de ce procédé.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 est une vue en perspective d'un contenant dans lequel un élément communicant va être disposé,
- la figure 2 est une vue en perspective du contenant de la figure 1 dans lequel est fixé l'élément communicant,
- la figure 3 illustre une coupe transversale du contenant de la figure 2,
- la figure 4 illustre une étape particulière du procédé d'instrumentation dans laquelle plusieurs éléments communicants sont ajoutés dans le contenant,
- la figure 5 illustre une vue en coupe transversale du contenant après ajout et fixation de la pluralité d'éléments communicants,
- la figure 6 est une vue illustrant le principe de la détermination des positions des éléments communicants les uns par rapport aux autres dans le repère prédéterminé,
- la figure 7 illustre schématiquement l'algorithme permettant de déterminer les positions des différents éléments communicants au sein du repère prédéterminé,
- la figure 8 illustre un dispositif configuré de sorte à être utilisé dans le cadre de la mise en œuvre du procédé d'instrumentation,
- la figure 9 illustre une mise en œuvre particulière d'un élément communicant.

### Description de modes préférentiels de l'invention

Dans l'expectative d'effectuer un contrôle sur un contenant en mouvement, notamment une toupie de camion béton, le procédé décrit ci-après diffère de l'art antérieur en ce qu'il permet d'instrumenter le contenant, notamment dans le but d'utiliser des données issues de l'instrumentation en vue d'assurer une bonne qualité du contenu du contenant tel un béton ou un mortier.

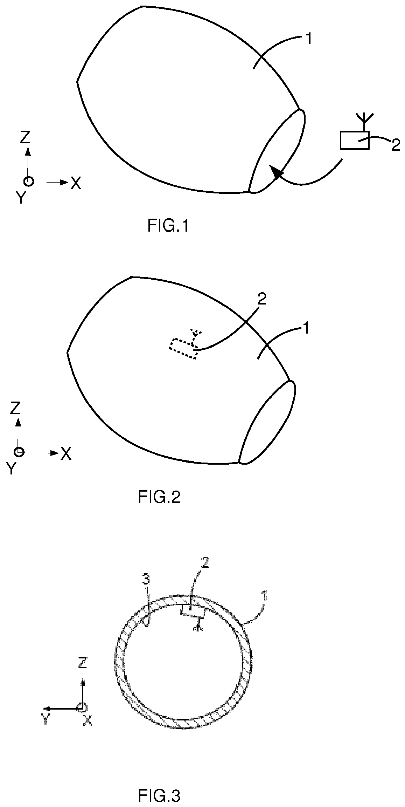

Sur les figures 1 à 3, un procédé d'instrumentation d'un contenant 1 apte à être mis en mouvement dans un repère prédéterminé (X,Y,Z) comporte une étape de placement (figure 1) d'au moins un élément communicant 2 dans le contenant 1, notamment sur une surface intérieure 3 du contenant 1. Par ailleurs, un tel procédé d'instrumentation comprend une étape de suivi du positionnement de chaque élément communicant 2 dans le temps au sein du repère prédéterminé (X,Y,Z). On comprend qu'à partir de l'étape de suivi du positionnement, il est possible d'extrapoler des données en vue de les utiliser pour, par exemple, analyser un comportement du contenant et/ou du contenu du contenant.

Par « repère prédéterminé », on entend préférentiellement un repère orthonormé en trois dimensions X, Y, Z.

De préférence, le contenant est destiné à recevoir un ensemble de matériaux tel que du béton ou encore un mortier. Autrement dit, le contenant 1 peut avantageusement former un réservoir à ensemble de matériaux configuré de sorte à malaxer l'ensemble de matériaux notamment pour en éviter la prise. On comprend alors que l'ensemble de matériaux peut avoir un premier état dans lequel il peut être mélangé/malaxé (on parle alors d'ensemble de matériaux sous une « forme molle ») et un deuxième état dit de prise dans lequel les matériaux de l'ensemble de matériaux sont agrégés de sorte à former un bloc cohérent, par exemple du fait d'un séchage de l'ensemble de matériaux (on parle alors d'ensemble de matériaux sous une « forme dure»).

Le contenant peut être tel qu'il permet de mixer/malaxer des matériaux pour contrôler la qualité de ces matériaux.

Chaque élément communicant peut aussi être utilisé pour extrapoler l'état qualitatif de l'ensemble de matériaux dans le contenant. Dans ce cas, chaque objet communicant peut comporter des capteurs idoines (capteur d'attitude, capteur d'humidité, capteur thermique, etc.). Ainsi, le suivi du positionnement d'un élément communicant 2 au sein du contenant 1, notamment lorsque ce dernier est rempli au moins partiellement par l'ensemble de matériaux (sous sa forme molle), peut participer à la détermination de l'état qualificatif ou à la détermination du comportement de l'ensemble de matériaux dans le contenant 1.

Par « élément communicant », on entend un élément, notamment électronique, configuré pour communiquer des informations et/ou effectuer des mesures, par exemple pour les communiquer à un module de calcul. Un élément communicant 2, notamment lorsqu'il est seul dans le contenant 1, peut, par exemple, comporter une caméra permettant de cartographier le volume en vue de déterminer sa position et/ou d'analyser le contenu du contenant (c'est à dire l'ensemble de matériaux dans l'exemple).

Par « placement d'un élément communiquant 2 sur une surface intérieure 3 du contenant 1 », on entend que l'élément communiquant 2 est fixé sur la surface intérieure 3. Par exemple, cette fixation est réalisée par collage, par attraction magnétique, par vissage, etc. Une fois fixé sur la surface intérieure 3, l'objet communicant 2 peut, par exemple, réaliser des mesures ou analyses représentatives du contenu du contenant 1.

Avantageusement, l'étape de placement comporte le placement de plusieurs éléments communicants 2 sur la surface intérieure 3 du contenant 1 et la détermination des positions des différents éléments communicants 2 par rapport à la surface intérieure 3 du contenant 1. L'utilisation de plusieurs éléments communicants 2 permet notamment d'augmenter le nombre de données issues de ces éléments communicants, par exemple pour améliorer la caractérisation du contenu du contenant.

Selon une réalisation particulière, le contenant 1 comporte des emplacements prédéterminés de fixation des éléments communicants. Si ces emplacements sont connus et fixés, la position des éléments communicants 2 au cours du temps pourra alors directement être déterminée, par exemple à partir de capteurs d'attitude disposés dans chacun des éléments communicants 2.

Des capteurs d'attitude, aussi appelés capteurs de positionnement dans la présente description, sont capables de déterminer l'orientation d'un élément communiquant 2 qu'ils équipent au sein du repère prédéterminé.

Ainsi, on comprend que chaque élément communicant 2 peut être équipé d'un accéléromètre et/ou d'un magnétomètre et/ou d'un gyroscope formant chacun un capteur de positionnement. La présence d'un accéléromètre et d'un magnétomètre dans un élément communiquant 2 permet de déterminer son comportement statique, et l'ajout d'un gyroscope son comportement dynamique.

Le suivi des positions des éléments communicants peut être mis en œuvre selon une estimation à partir des capteurs de positionnement/attitude et des distances séparant les différents éléments communicants. Les enseignements du document « Navigation with IMU/GPS/Digital Compass with Unscented Kalman Filter » de Pifu Zhang et al. peuvent par exemple être utilisés à cette fin (publication de juillet 2005, Proceedings of the IEEE, International Conférence on Mechatronics & Automation, Niagara Falls, Canada).

Cependant, le fait de positionner les éléments communicants 2 à des endroits précis et connus du contenant 1 n'est pas toujours réalisable. De plus, il est plus ergonomique et convivial pour un utilisateur de pouvoir disposer aléatoirement ces éléments communicants 2. Cependant, un placement aléatoire doit être accompagné d'une détermination de la position des différents éléments communicants les un par rapports aux autres.

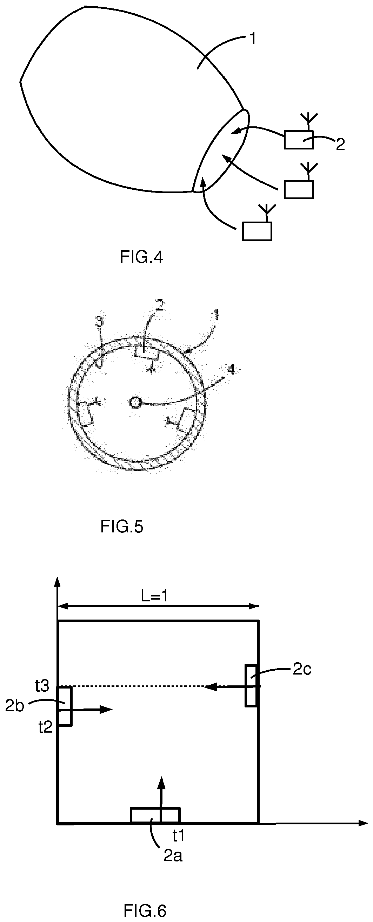

Ainsi, selon une mise en œuvre illustrée à la figure 4, lorsque la surface intérieure 3 du contenant 1 délimite un volume intérieur de géométrie connue, l'étape de placement des éléments communicants 2 comporte avantageusement une introduction aléatoire des éléments communicants 2 dans le contenant 1, de préférence au cours de son mouvement. Lorsque le contenant 1 est en mouvement, les éléments communicants 2 iront plus facilement se placer à des endroits différents de la surface intérieure 3 (figure 5).

Dans le cadre de la présente mise en œuvre du procédé, l'étape de placement des éléments communicants 2 comporte en outre une étape de fixation des éléments communicants 2 sur la surface intérieure 3 du contenant 1, de préférence par attraction magnétique entre chaque élément communicant 2 et la surface intérieure 3 du contenant 1. On comprend alors que la surface intérieure 3 du contenant 1 peut être formée par un matériau ferromagnétique et que chaque élément communicant 2 peut comporter un aimant, permanent ou non. Par ailleurs, l'étape de placement des éléments communicants 2 comporte en outre la détermination, à partir de données issues des éléments communicants et de la géométrie connue, de la position des différents éléments communicants 2 par rapport à la surface intérieure 3 du contenant 1.

De préférence, les éléments communicants 2 sont chacun configurés de sorte à pouvoir interagir, par exemple communiquer, avec un objet électronique 4 destiné à se déplacer dans le contenant 1 (figure 5). Selon une réalisation, cette interaction correspond à déterminer la position de l'objet électronique 4 par rapport aux éléments communicants 2. Cette réalisation sera décrite plus en détails ci-après.

De préférence, les données issues des éléments communicants 2 correspondent à des données de comportement déterminées des éléments communicants 2 et/ou à des données de distance déterminées séparant les éléments communicants 2 une fois que ces derniers sont fixés sur la surface intérieure 3 du contenant 1.

Autrement dit, le procédé d'instrumentation peut comporter une étape de détermination des données de comportement des éléments communicants 2 à partir d'au moins un des capteurs de comportement suivants équipant chacun des éléments communicants : un accéléromètre, un magnétomètre, et/ou un gyroscope.

On comprend aussi que le procédé peut comporte une étape de détermination des données de distance à partir de capteurs de distance équipant les éléments communicants 2, notamment chaque élément communicant 2 peut comporter un capteur acoustique et/ou un capteur optique formant un capteur de distance. Par exemple, si chaque élément communicant 2 envoi un son à un instant donné, en utilisant la vitesse de propagation du son et l'instant de réception dudit son par les autres éléments communicants 2, il est possible de déterminer, par exemple via le module de calcul relié à tous les éléments communicants et collectant des informations (synchronisées) issues des éléments communicants 2, la distance séparant l'élément communicant 2 ayant émis le son de chacun des éléments communicants 2 ayant réceptionné le son émis. Ainsi, chaque capteur de distance peut comporter un émetteur et un récepteur acoustiques ou optiques. Les différents éléments communicants 2 peuvent être distingués les uns des autres par le type de son qu'ils émettent, par exemple il peut être utilisé des spectres différents, des durées différentes, une signature précédent l'impulsion, etc. Le capteur optique peut fonctionner de manière similaire, la relation distance/intensité lumineuse étant seulement plus complexe.

Selon une mise en œuvre particulière combinant tout ou partie des capteurs de comportement et des capteurs de distance, la détermination des positions des éléments communicants 2 peut être mise en œuvre à partir de calculs issus des données de mesure des différents capteurs concernés et de la géométrie connue du volume du contenant 1. Autrement dit, la détermination de la position, dans un repère de référence prédéfini et dont l'origine est attachée au volume du contenant 1, des éléments communicants 2 fixés au contenant est basée sur la connaissance de la géométrie du volume du contenant, de mesures de comportement des éléments communicants 2 et de distance entre les éléments communicants 2. Le nombre minimal de mesures dépend de la géométrie, mais de préférence, au moins quatre éléments communicants 2, préférentiellement non coplanaires, seront disposés dans le contenant 1.

Ainsi, l'étape de placement comporte avantageusement le placement d'au moins quatre éléments communicants 2 dans le contenant 1. Afin de faciliter les calculs, ces éléments communicants sont fixés à la surface intérieure 3 de sorte à ne pas être coplanaires. Dans l'éventualité où ils seraient coplanaires, il serait intéressant de placer un élément communicant additionnel à l'intérieur du contenant, non coplanaire avec les autres, de sorte à différencier les éléments communicants situés dans le contenant.

Dans un exemple particulier où le contenant est une sphère de rayon quelconque, la position d'un point sur celle-ci est paramétrable par deux angles : inclinaison et azimut. Ces angles sont donnés par les capteurs d'attitude/de comportement. Dans ce cadre, chaque élément communicant détermine facilement sa position à chaque instant.

Dans un autre exemple particulier, le contenant peut avoir une section carrée et par exemple être délimité par un cube. Pour un cube d'arête quelconque, il y a six attitudes/comportements possibles associés à chaque face. L'attitude de l'élément communicant ne détermine pas la position mais seulement la face sur laquelle il est fixé. Il faut alors au moins quatre éléments communicants non coplanaires pour obtenir une matrice des distances 4 x 4 qui sera utilisée pour obtenir une matrice des positions 4 x 3. Toutes les matrices de positions qui peuvent être obtenues avec une matrice des distances sont reliées par une isométrie trois dimensions. La connaissance de la géométrie du volume et des attitudes/comportements lève l'ambiguïté.

Pour simplifier, dans le cadre d'un carré (si on enlève la troisième dimension d'un cube) seulement trois éléments communicants non alignés sont nécessaires. Une attitude détermine l'attitude du carré car nous savons que les capteurs sont à l'intérieur du contenant. La position de chaque élément communicant est paramétrée par un seul paramètre contraint par les dimensions du carré. Ce paramètre est déterminé via les distances entre éléments communicants.

Sur un exemple illustré à la figure 6 et représentant un cas simple où une longueur L, égale à 1, représente la longueur d'un côté du carré, les attitudes mesurées donnent l'attitude du carré (ici, on considère un carré dont le système d'axe correspond au système d'axe du repère prédéterminé, c'est-à-dire que la rotation est l'identité) ainsi que les arêtes associées à chaque élément communicant 2a, 2b, 2c. Ainsi, on a les paramètres de positionnement P suivants pour les éléments communicants 2a, 2b, 2c : $P_{2a}$ (t1, 0) ; $P_{2b}$ (0, t2) ; $P_{2c}$ (1, t3), avec $0 \leq ti \leq 1$ pour i=1, 2 et 3, t1 étant la coordonnée en abscisse selon la figure 6 de l'élément communicant 2a, t2 la coordonnée en ordonnée selon la figure 6 de l'élément communicant 2b, et t3 la coordonnée en ordonnée selon la figure 6 de l'élément communicant 2c. Les distances mesurées sont reliées aux paramètres par les 3 équations suivantes :

$$t1^2 + t2^2 = d^2_{2a,\,2b}$$

$$(t1-1)^2 + t3^2 = d^2_{2a,\,2c}$$

$$1 + (t3-t2)^2 = d^2_{2b,\,2c}$$

La première équation donne $t2 = \sqrt{d_{2a,2b}^2 - t1^2}$ car t2≥0. La deuxième équation donne $t3 = \sqrt{d_{2a,2c}^2 - (t1-1)^2}$ car t3≥0. La dernière équation est une équation en t1 munie d'une unique solution comprise dans le segment [0 ; 1]. On trouve alors les coordonnées de chaque élément communicant.

Les deux exemples ci-dessus montrent que c'est bien la géométrie connue du volume qui détermine le procédé de reconstruction des positions des éléments communicants 2 fixés sur la surface intérieure 3 du contenant 1. Cependant, des données suffisantes de distances, d'attitudes et de géométries permettent d'inverser ce problème quelle que soit la géométrie. Plus la géométrie est complexe (non convexité, asymétrie, etc.), plus le nombre de données est important.

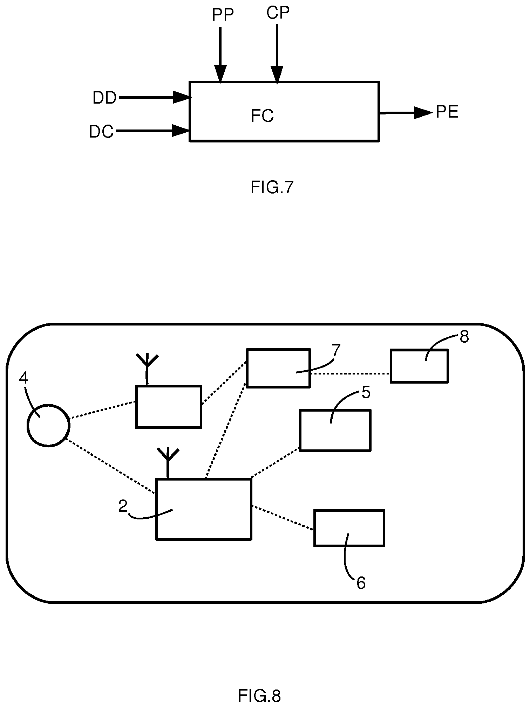

On comprend de ce qui a été dit ci-dessus, que selon une mise en œuvre particulière illustrée à la figure 7, l'étape de détermination des positions PE des éléments communicants 2 est mise en œuvre à partir d'une étape d'application d'une fonction de calcul FC prenant en entrée : les données de distance déterminées DD entre les éléments communicants 2 et/ou les données de comportement déterminées DC des éléments communicants 2 et/ou une liste prédéterminée de positions possibles PP des éléments communicants 2 par rapport à la surface intérieure 3 du contenant 1 et/ou une liste prédéterminée des comportements possibles CP des éléments communicants. Les positions possibles PP et les comportements/attitudes possibles CP peuvent être assimilés à des vecteurs dont le calcul ne sera pas ici décrit en détail car à la portée de l'homme du métier. Les comportements possibles sont représentatifs des valeurs que peuvent prendre les capteurs de comportement en chaque position possible d'un élément communicant.

En fait, lorsque la surface intérieure 3 du contenant 1 délimite un volume intérieur de géométrie connue, il est possible de réduire a priori le nombre de positions envisageables pour les éléments communicants 2 sur la surface du contenant en fonction de la forme des éléments au niveau de leurs faces prévues pour être en contact avec le contenant, par exemple dans le cas d'un contenant de forme complexe. Ainsi, il est possible de connaître un ensemble de positions possibles des éléments communicants 2 au niveau de la surface intérieure 3 du contenant 1 ainsi qu'un ensemble de comportements possibles de ces derniers. La fonction de calcul FC peut être un algorithme « glouton » déterminant des positions optimales de chacun des éléments communicants 2 parmi toutes lesdites positions possibles PP et tous lesdits comportements possibles CP en fonction des données de comportement DC déterminées des éléments communicants 2 et des données de distance DD déterminées entre les éléments communicants 2. Autrement dit, la méthode « glouton » consiste à tester toutes les solutions possibles et à voir lesquelles répondent au problème.

Bien qu'il ait été donné un exemple d'algorithme « glouton », d'autres types d'algorithmes peuvent aussi être utilisés comme la méthode de descente de gradient, ou tout autre type de méthode d'optimisation adaptée en fonction de la forme du contenant.

Si on néglige le bruit de mesure issu des différents capteurs concernés, l'algorithme glouton vient trouver le vecteur PE parmi toutes les positions et comportements possibles PP et CP et qui correspondent parfaitement avec DD et DC. On note alors f la fonction qui permet de transformer PP en DD, c'est-à-dire que DD = f(PE), f étant une fonction qui donne les distances en fonction de la position (elle ne dépend pas du volume du contenant). On note g la fonction qui permet de transformer PE en DC, c'est-à-dire que DC = g(PE), g étant une fonction qui donne le comportement en fonction de la position (elle dépend clairement du volume du contenant).

Selon une réalisation particulière, la fonction de calcul FC prend en compte un bruit de mesure associé aux données de distance déterminées DD et un bruit de mesure associé aux données de comportement déterminées DC, notamment la fonction de calcul considère les bruits de mesure comme étant additifs et gaussiens. En effet, le cas bruité sera généralement celui utilisé pour le plus de précision dans le sens où il correspond au cas réellement rencontré.

Autrement dit, dans le cas bruité, si on fait l'hypothèse que les bruits de mesure sont tous additifs et gaussiens (ce qui est une hypothèse valide en pratique) on peut alors avoir les modèles de mesures suivants :

$$DD = f(PE) + B\_D,$$

$$DC = g(PE) + B\_C,$$

où B_D et B_C sont les bruits des mesures sur les distances et les comportements de matrices de covariance respectives V_D et V_C.

L'estimateur optimal de PE, noté PEO est alors solution du problème d'optimisation suivant :

$$PBO = argmin\ (DD - f(PE))'\ V\_D\ (DD - f(PE)) + (DC - g(PE))'\ V\_C\ (DC - g(PE))PE$$

Ce problème peut être résolu à l'aide d'une méthode glouton, ou d'une méthode de descente de gradient. Il faut bien noter que g peut être une fonction discrète (ou pas en fonction du volume) et que PE est contraint à appartenir au volume du contenant de géométrie connue.

Une telle instrumentation peut être avantageuse pour différentes utilisation du contenant. Par exemple, un objet électronique 4 placé dans le contenant, comme évoqué précédemment, peut alors être surveillé à partir de chacun des éléments communicants 2 (figure 5). Cette surveillance peut alors mettre en œuvre une détermination de distance entre chaque élément communicant 2 et ledit objet électronique 4 afin d'étudier le comportement dudit objet électronique au cours du mouvement du contenant 1 dans le repère prédéterminé évoqué précédemment.

Ainsi, l'invention est aussi relative à un procédé de surveillance d'au moins un objet électronique 4, qui comporte une étape préliminaire de mise en œuvre du procédé d'instrumentation tel que décrit ci-dessus de sorte à instrumenter ledit contenant 1. Par ailleurs, le procédé de surveillance comporte aussi une étape d'introduction de l'objet électronique 4 dans le contenant 1, et une étape d'étude du comportement de l'objet électronique 4 dans le contenant 1, notamment au cours du mouvement du contenant 1 dans le repère prédéterminé, à partir d'une interaction de l'objet électronique 4 avec un élément communicant 2 ou, le cas échéant, avec les éléments communicants 2 (et de préférence avec chaque élément communicant). L'interaction dont on parle ici, peut être une mesure de distance (par exemple du même type que celle mise en œuvre pour mesurer la distance entre les éléments communicants comme décrit ci-avant), une surveillance vidéo à partir d'une caméra embarquée sur l'élément communicant, etc. On comprend ici que les éléments communicants sont fixés à la surface intérieure du contenant alors que l'objet électronique est libre de se déplacer dans le contenant.

Selon une réalisation particulière, l'étape d'étude du comportement de l'objet électronique 4 peut comporter les étapes suivantes : déterminer le positionnement de l'objet électronique 4 par rapport aux éléments communicants 2, et déterminer le positionnement de l'objet électronique au sein du repère prédéterminé à partir du positionnement déterminé de l'objet électronique 4 par rapport aux éléments communicants et à partir des positions des éléments communicants 2 dans le repère prédéterminé à un instant correspondant de l'étape de suivi du positionnement des éléments communicants 2 dans le temps au sein du repère prédéterminé. Autrement dit, la position de l'objet électronique 4 est d'abord déterminée dans un référentiel défini par les éléments communicants 2, c'est-à-dire que l'on cherche à déterminer la position de l'objet électronique 4 dans le contenant par rapport aux éléments communicants 2, avant de transformer cette position du référentiel des éléments communicants au référentiel du repère prédéterminé (c'est-à-dire celui dans lequel le contenant 2 est en mouvement).

Ainsi, en déterminant la position de l'objet électronique 4 plusieurs fois au cours du temps, il est possible de déterminer le comportement de l'objet électronique 4 dans le contenant 1 en fonction de son mouvement. Autrement dit, le procédé de surveillance peut comporter une étape de suivi du positionnement de l'objet électronique 4 au sein du repère prédéterminé dans le temps.

L'étude du comportement de l'objet électronique 4 dans le contenant 1, en particulier au sein du repère prédéterminé lorsque le contenant 1 est en mouvement, peut par exemple permettre d'analyser un milieu contenu dans le contenant tel que du béton ou un mortier comme évoqué précédemment.

Ainsi, le procédé de surveillance peut comporter une étape de remplissage d'au moins une partie du contenant 1 par un ensemble de matériaux, notamment du granulat formant par exemple du béton. Ce remplissage peut être réalisé au cours du procédé d'instrumentation ou après. Par ailleurs, lorsque ce remplissage est réalisé au cours du procédé d'instrumentation, l'ajout des éléments communicants 2 dans le contenant 1 peut se faire après ou pendant le remplissage.

Avantageusement, l'objet électronique 4 se présente sous la forme d'un matériau de l'ensemble de matériaux et est disposé dans l'ensemble de matériaux avant, après, ou au cours, de l'étape de remplissage.

Par « se présente sous la forme d'un matériau de l'ensemble de matériaux », on entend que l'objet électronique 4 comporte une forme extérieure, un poids et/ou des dimensions sensiblement identiques à celles dudit matériau. Ceci a pour conséquence que l'objet électronique 4 présente un comportement, au sein du contenant 1, identique aux matériaux de l'ensemble de matériaux. Il en résulte qu'il est plus simple d'en déduire le comportement de l'ensemble de matériaux.

On comprend alors que le procédé de surveillance de l'objet électronique peut comporter une étape de caractérisation de l'état de l'ensemble de matériaux dans le contenant à partir de l'étape d'étude du comportement de l'objet électronique 4. Cette caractérisation sera d'autant plus pertinente du fait que le comportement dudit objet électronique 4 est identique à celui des matériaux qui constituent l'ensemble de matériaux.

L'état de l'ensemble de matériaux peut être caractérisé en temps réel lorsque les éléments communicants et/ou l'objet électronique sont reliés via un module de communication au module de calcul. Si le module de communication n'est pas présent, chaque élément communicant peut stocker à chaque instant discret (dont la période d'échantillonnage est prédéfinie et est la même pour tous les éléments communicants) son comportement/attitude et sa distance avec les autres éléments communicants. Certaines des distances peuvent être manquantes à certains instants (problème de visibilité, mesure défaillante, etc.). On notera que ce manque d'information ponctuel est rarement gênant car il n'abaisse pas le niveau d'observabilité dans une grande mesure (en effet, toutes les distances ne sont pas nécessaires pour estimer la position). En sortie du contenant, les données de tous les éléments communicants et/ou objet électroniques sont rapatriées vers le module de calcul qui applique les principes détaillés précédemment.

Comme illustré à la figure 8, un dispositif permettant la mise en œuvre d'au moins le procédé d'instrumentation comporte : au moins un élément communicant 2, un élément de détermination 5 du positionnement de l'élément communicant, notamment par rapport à la surface intérieure du contenant, et un élément de détermination 6 du suivi du positionnement de chaque élément communicant dans le repère prédéterminé lorsque le contenant est en mouvement dans ledit repère prédéterminé.

Par ailleurs, le dispositif peut aussi comporter au moins un objet électronique 4 apte à interagir avec plusieurs éléments communicants 2 du dispositif, un élément de détermination 7 du positionnement de l'objet électronique par rapport aux éléments communicants à partir de l'interaction entre les éléments communicants 2 et l'objet électronique 4, et un élément de détermination 8 du positionnement de l'objet électronique 4 dans le repère prédéterminé à partir de données issues de l'élément de détermination 7 du positionnement de l'objet électronique par rapport aux éléments communicants 2. On comprend alors qu'un tel dispositif est, dans ce cas, aussi configuré de sorte à mettre en œuvre le procédé de surveillance tel que décrit ci-dessus.

En fait, de manière générale, le dispositif peut comporter autant d'éléments particuliers que les procédés d'instrumentation ou de surveillance comportent d'étapes. Dès lors chaque élément particulier du dispositif est alors configuré de sorte à accomplir la fonction de l'étape concernée.

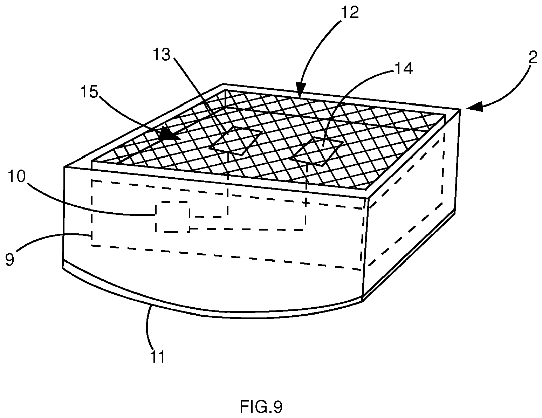

Selon une mise en œuvre particulière illustrée à la figure 9, un élément communicant 2 comporte une face inférieure 11 destinée à coopérer avec la surface intérieure du contenant, cette face est avantageusement aimantée et/ou conformée de sorte à épouser une partie de la surface intérieure du contenant. A l'opposé de cette face aimantée, s'étend une zone étanche 9 dans laquelle les capteurs de distance et/ou d'attitude peuvent être disposés en tout ou partie. Sur une face supérieure 12 opposée à la face inférieure 11, un émetteur et un récepteur acoustiques (ou optiques) 13, 14 sont disposés de sorte à permettre des mesures de l'environnement extérieur de l'élément communiquant 2. L'émetteur et le récepteur 13, 14 peuvent être reliés à une électronique 10 contenue dans la zone étanche 9. Par ailleurs, la face supérieure 12 peut être protégée par une grille de protection 15. Cette grille de protection 15 protège l'émetteur et le récepteur 13, 14 tout en leur permettant d'émettre ou de recevoir des signaux vers, ou en provenance de, l'autre côté de la grille de protection 15. L'émetteur et le récepteur 13, 14 peuvent être formés par une membrane vibrante en PZT (pour Titano-Zirconate de Plomb). L'émetteur et le récepteur 13, 14 sont avantageusement reliés via des électrodes (représentées en pointillés à la figure 9) à l'électronique 10 (notamment une batterie et un contrôleur) située dans la partie étanche et sans préjudice à l'étanchéité. En particulier, l'électronique 10 de la zone étanche 9 peut comporter un module de communication, une centrale inertielle (accéléromètre, magnétomètre et gyroscope, tous préférentiellement selon 3 axes), une batterie, une mémoire et une intelligence embarquée. L'intelligence embarquée permet, par exemple, de gérer la commande de l'émetteur et les données issues des capteurs, ou encore de déterminer les distances séparant l'élément communicant concerné de tous les autres éléments communicants.

Autrement dit, de manière générale, l'élément communicant 2 de la figure 9 destiné à être utilisé dans le cadre du dispositif tel que décrit ou d'au moins l'un des procédé d'instrumentation ou de surveillance tels que décrits, comporte un boitier étanche 9 comportant une électronique 10, une première face 11 du boitier étanche 9 étant formée par un aimant (permanent ou non), notamment destiné à coopérer avec la surface intérieure du contenant, une deuxième face 12 du boitier, distincte de la première face comprenant un émetteur 13 et un récepteur 14 reliés à l'électronique 10 et configurés de sorte à participer à la détermination d'une distance entre ledit élément communicant et un autre élément communicant identique et avantageusement à la détermination de la position de l'objet électronique dans le contenant.

Selon l'application, le module de communication peut être optionnel si l'information enregistrée par tous les éléments communicants n'a pas besoin d'être traitée en temps réel. Sinon, le module de communication de chaque élément communicant peut communiquer avec un module de calcul, notamment placé à l'extérieur du volume du contenant (par exemple, dans le camion qui transporte l'ensemble de matériaux dans le cadre d'une toupie). Dans ce cas, tous les éléments communicants sont avantageusement munis d'une antenne adaptée à l'application. On peut également imaginer une communication via la surface intérieure du contenant, par exemple par courant porteur si la surface intérieure du contenant est électriquement conductrice. Dans le cadre d'une communication sans-fil dans un milieu humide comme par exemple le béton, il est possible d'utiliser une antenne adaptée du type de celle décrite dans le document WO2011157941.

En outre, le, ou les, éléments communicants et/ou l'objet électronique peuvent être configurés de sorte à mesurer d'autres informations comme un pH, une température, une hygrométrie, un temps de séchage, etc).

De préférence, la surface intérieure du contenant est de forme concave de sorte à permettre une différenciation entre les différentes positions possibles et les distances possibles des éléments communicants. Ceci est notamment le cas lorsque le contenant est une toupie d'un camion de livraison de béton ou de mortier.

L'objet électronique peut être télé-alimenté de sorte à interagir avec chaque élément communicant (par exemple par échange de sons pour le calcul des distances).

L'objet électronique peut avoir une structure identique à celle des éléments communicants, excepté la partie assurant la fixation sur les parois du contenant (pour la mesure de distance/d'attitude). On peut prévoir un objet électronique avec un système qui reçoit une impulsion en provenance des éléments communicants et renvoie une impulsion en retour (optique et/ou acoustique). On peut également prévoir un objet électronique passif, au sens qu'il n'émet aucun signal à destination des éléments communicants. Par exemple, si on prévoit une caméra thermique dans les éléments communicants, l'objet électronique peut être simplement doté d'un élément chauffant pour être détecté.

Les procédés décrits ci-avant s'appliquent tout particulièrement dans le domaine du ciment, notamment lorsque ce dernier doit être transporté dans un camion malaxeur, aussi appelé camion toupie (le malaxeur ou toupie formant alors le contenant).

Par ailleurs, on comprend de ce qui a été dit ci-avant que, le cas échéant, le mouvement du contenant correspond à une étape de malaxage de son contenu. Le mouvement du contenant comporte alors avantageusement au moins une composante de rotation du contenant sur lui-même.

Selon une mise en œuvre particulière, les éléments communicants et/ou le ou les objets électroniques peuvent comprendre des moyens de télé-alimentions et être coulés avec le béton en sortie du contenant afin de livrer des informations idoines une fois enfouis et notamment lorsque le béton a durci.

**Revendications**

1. Procédé de surveillance d'au moins un objet électronique (4), **caractérisé en ce qu'**il comporte la mise en œuvre d'un procédé d'instrumentation d'un contenant (1), formant un réservoir à ensemble de matériaux configuré de sorte à malaxer l'ensemble de matériaux, apte à être mis en mouvement dans un repère prédéterminé, ce procédé d'instrumentation comportant les étapes suivantes :

   - un placement de plusieurs éléments communicants (2) dans le contenant (1) sur une surface intérieure (3) du contenant (1) et la détermination des positions des différents éléments communicants (2) par rapport à la surface intérieure (3) du contenant (1), cette surface intérieure (3) du contenant délimitant un volume intérieur de géométrie connue et cette étape de placement des éléments communicants comportant les étapes suivantes;

      - une introduction aléatoire des éléments communicants (2) dans le contenant (1), de préférence au cours de son mouvement,
      - une fixation des éléments communicants (2) sur la surface intérieure (3) du contenant,
      - la détermination, à partir de données issues des éléments communicants (2) et de la géométrie connue, de la position des différents éléments communicants (2) par rapport à la surface intérieure (3) du contenant (1),

- un suivi du positionnement de chaque élément communicant (2) dans le temps au sein du repère prédéterminé.

et **caractérisé en ce qu'**il comprend les étapes complémentaires suivantes :

- introduction du au moins un objet électronique (4) dans le contenant (1),
- étude du comportement de l'objet électronique (4) dans le contenant (1), notamment au cours du mouvement du contenant (1) dans le repère prédéterminé, à partir d'une interaction du au moins un objet électronique (4) avec chaque élément communicant (2).

2. Procédé selon la revendication précédente, **caractérisé en ce que** l'étape de placement des éléments communicants comporte une fixation des éléments communicants (2) sur la surface intérieure (3) du contenant par attraction magnétique entre chaque élément communicant (2) et la surface intérieure (3) du contenant (1).

3. Procédé selon la revendication précédente, **caractérisé en ce que** les données issues des éléments communicants (2) correspondent à des données de comportement déterminées des éléments communicants (2) et/ou à des données de distance déterminées séparant les éléments communicants (2) une fois que ces derniers sont fixés sur la surface intérieure (3) du contenant (1).

4. Procédé selon la revendication précédente, **caractérisé en ce qu'**il comporte une étape de détermination des données de comportement des éléments communicants (2) à partir d'au moins un des capteurs suivants équipant chacun des éléments communicants (2) : un accéléromètre, un magnétomètre, et/ou un gyroscope.

5. Procédé selon l'une des revendications 3 et 4, **caractérisé en ce qu'**il comporte une étape de détermination des données de distance à partir de capteurs de distance équipant les éléments communicants (2), notamment chaque élément communicant (2) comporte un capteur acoustique et/ou un capteur optique formant un capteur de distance.

6. Procédé selon l'une des revendications 3 à 5, **caractérisé en ce que** l'étape de détermination des positions (PE) des éléments communicants (2) est mise en œuvre à partir d'une étape d'application d'une fonction de calcul (FC) prenant en entrée : les données de distance déterminées (DD) entre les éléments communicants (2) et/ou les données de comportement déterminées (DC) des éléments communicants (2) et/ou une liste prédéterminée de positions possibles (PP) des éléments communicants (2) par rapport à la surface intérieure (3) du contenant (1) et/ou une liste prédéterminée des comportements possibles (CP) des éléments communicants (2).

7. Procédé selon la revendication précédente, **caractérisé en ce que** la fonction de calcul (FC) est un algorithme glouton déterminant des positions optimales de chacun des éléments communicants (2) parmi toutes lesdites positions possibles (PP) et tous lesdits comportements possibles (CP) en fonction des données de comportement déterminées (CD) des éléments communicants (2) et des données de distance (DD) déterminées entre les éléments communicants (2).

8. Procédé selon l'une des revendications 6 et 7, **caractérisé en ce que** la fonction de calcul (FC) prend en compte un bruit de mesure associé aux données de distance déterminées (DD) et un bruit de mesure associé aux données de comportement déterminées (DC), notamment la fonction de calcul (FC) considère les bruits de mesure comme étant additifs et gaussiens.

9. Procédé selon l'une des revendications précédentes, **caractérisé en ce que** l'étape d'étude du comportement de l'objet électronique (4) comporte les étapes suivantes :

- déterminer le positionnement de l'objet électronique (4) par rapport aux éléments communicants (2),
- déterminer le positionnement de l'objet électronique (4) au sein du repère prédéterminé, à partir du positionnement déterminé de l'objet électronique (4) par rapport aux éléments communicants (2) et à partir des positions des éléments communicants (2) dans le repère prédéterminé à un instant correspondant de l'étape de suivi du positionnement des éléments communicants (2) dans le temps au sein du repère prédéterminé.

10. Procédé selon l'une des revendications précédentes, **caractérisé en ce qu'**il comporte une étape de suivi du positionnement de l'objet électronique (4) au sein du repère prédéterminé dans le temps.

11. Procédé selon l'une des revendications précédentes, **caractérisé en ce qu'**il comporte une étape de remplissage d'au moins une partie du contenant (1) par un ensemble de matériaux, notamment du granulat.

**12.** Procédé selon la revendication précédente, **caractérisé en ce que** l'objet électronique (4) se présente sous la forme d'un matériau de l'ensemble de matériaux et est disposé dans l'ensemble de matériaux avant, après, ou au cours, de l'étape de remplissage.

**13.** Procédé selon l'une des revendications 11 ou 12, **caractérisé en ce qu'**il comporte une étape de caractérisation de l'état de l'ensemble de matériaux dans le contenant (1) à partir de l'étape d'étude du comportement de l'objet électronique (4).

**14.** Dispositif configuré pour la mise en œuvre d'au moins le procédé selon l'une des revendications précédentes, **caractérisé en ce qu'**il comporte : au moins un élément communicant (2), un élément de détermination (5) du positionnement de l'élément communicant (2), notamment par rapport à la surface intérieure du contenant, et un élément de détermination (6) du suivi du positionnement de chaque élément communicant dans le repère prédéterminé lorsque le contenant est en mouvement dans ledit repère prédéterminé, et **en ce qu'**il comporte :

- au moins un objet électronique (4) apte à interagir avec plusieurs éléments communicants (2) du dispositif, et
- un élément de détermination (7) du positionnement de l'objet électronique (4) par rapport aux éléments communicants (2) à partir de l'interaction entre les éléments communicants et l'objet électronique,
- un élément de détermination (8) du positionnement de l'objet électronique (4) dans le repère prédéterminé à partir de données issues de l'élément de détermination (7) du positionnement de l'objet électronique (4) par rapport aux éléments communicants (2).

**Patentansprüche**

**1.** Verfahren zur Überwachung mindestens eines elektronischen Objekts (4), **dadurch gekennzeichnet, dass** es die Umsetzung eines Instrumentierungsverfahrens eines Behälters (1) umfasst, der ein Behältnis mit einer Gesamtheit von Materialien bildet, das dazu konfiguriert ist, die Gesamtheit von Materialien zu kneten, und fähig ist, in einem vorgegebenen Koordinatensystem in Bewegung gesetzt zu werden, wobei dieses Instrumentierungsverfahren die folgenden Schritte umfasst:

- Platzieren mehrerer kommunizierender Elemente (2) in dem Behälter (1) auf einer Innenoberfläche (3) des Behälters (1) und Ermitteln der Positionen der unterschiedlichen kommunizierenden Elemente (2) mit Bezug auf die Innenoberfläche (3) des Behälters (1), wobei diese Innenoberfläche (3) des Behälters ein Innenvolumen mit bekannter Geometrie abgrenzt und dieser Schritt des Platzierens der kommunizierenden Elemente die folgenden Schritte umfasst;

- zufälliges Einführen der kommunizierenden Elemente (2) in den Behälter (1), vorzugsweise während sich dieser bewegt,
- Befestigen der kommunizierenden Elemente (2) an der Innenoberfläche (3) des Behälters,
- Ermitteln, anhand von aus den kommunizierenden Elementen (2) stammenden Daten und der bekannten Geometrie, der Position der unterschiedlichen kommunizierenden Elemente (2) mit Bezug auf die Innenoberfläche (3) des Behälters (1),

- Nachverfolgen der Positionierung jedes kommunizierenden Elements (2) über die Zeit innerhalb des vorgegebenen Koordinatensystems.

und **dadurch gekennzeichnet, dass** es die folgenden ergänzenden Schritte beinhaltet:

- Einführen des mindestens einen elektronischen Objekts (4) in den Behälter (1),
- Untersuchen des Verhaltens des elektronischen Objekts (4) in dem Behälter (1), insbesondere während sich der Behälter (1) in dem vorgegebenen Koordinatensystem bewegt, anhand einer Interaktion des mindestens einen elektronischen Objekts (4) mit jedem kommunizierenden Element (2).

**2.** Verfahren nach dem vorhergehenden Anspruch, **dadurch gekennzeichnet, dass** der Schritt des Platzierens der kommunizierenden Elemente ein Befestigen der kommunizierenden Elemente (2) an der Innenoberfläche (3) des Behälters durch magnetische Anziehung zwischen jedem kommunizierenden Element (2) und der Innenoberfläche (3) des Behälters (1) umfasst.

3. Verfahren nach dem vorhergehenden Anspruch, **dadurch gekennzeichnet, dass** die aus den kommunizierenden Elementen (2) stammenden Daten ermittelten Verhaltensdaten der kommunizierenden Elemente (2) und/oder ermittelten Abstandsdaten, die die kommunizierenden Elemente (2) trennen, sobald diese an der Innenoberfläche (3) des Behälters (1) befestigt sind, entsprechen.

4. Verfahren nach dem vorhergehenden Anspruch, **dadurch gekennzeichnet, dass** es einen Schritt des Ermittelns der Verhaltensdaten der kommunizierenden Elemente (2) anhand mindestens eines der folgenden Sensoren, mit denen jedes der kommunizierenden Elemente (2) ausgerüstet ist, umfasst: eines Beschleunigungssensors, eines Magnetometers und/oder eines Gyroskops.

5. Verfahren nach einem der Ansprüche 3 und 4, **dadurch gekennzeichnet, dass** es einen Schritt des Ermittelns der Abstandsdaten anhand von Abstandssensoren, mit denen die kommunizierenden Elemente (2) ausgerüstet sind, umfasst, wobei jedes kommunizierende Element (2) insbesondere einen akustischen Sensor und/oder einen optischen Sensor umfasst, der/die einen Abstandssensor bildet/bilden.

6. Verfahren nach einem der Ansprüche 3 bis 5, **dadurch gekennzeichnet, dass** der Schritt des Ermittelns der Positionen (PE) der kommunizierenden Elemente (2) anhand eines Schritts des Anwendens einer Berechnungsfunktion (FC) umgesetzt wird, die Folgendes als Eingang nimmt: die ermittelten Abstandsdaten (DD) zwischen den kommunizierenden Elementen (2) und/oder die ermittelten Verhaltensdaten (DC) der kommunizierenden Elemente (2) und/oder eine vorgegebene Liste möglicher Positionen (PP) der kommunizierenden Elemente (2) mit Bezug auf die Innenoberfläche (3) des Behälters (1) und/oder eine vorgegebene Liste der möglichen Verhaltensweisen (CP) der kommunizierenden Elemente (2).

7. Verfahren nach dem vorhergehenden Anspruch, **dadurch gekennzeichnet, dass** die Berechnungsfunktion (FC) ein gieriger Algorithmus ist, der optimale Positionen jedes der kommunizierenden Elemente (2) aus allen möglichen Positionen (PP) und allen möglichen Verhaltensweisen (CP) in Abhängigkeit von den ermittelten Verhaltensdaten (DC) der kommunizierenden Elemente (2) und den ermittelten Abstandsdaten (DD) zwischen den kommunizierenden Elementen (2) ermittelt.

8. Verfahren nach einem der Ansprüche 6 und 7, **dadurch gekennzeichnet, dass** die Berechnungsfunktion (FC) ein mit den ermittelten Abstandsdaten (DD) assoziiertes Messrauschen und ein mit den ermittelten Verhaltensdaten (DC) assoziiertes Messrauschen berücksichtigt, wobei die Berechnungsfunktion (FC) das Messrauschen insbesondere als additives und gaußsches Messrauschen betrachtet.

9. Verfahren nach einem der vorhergehenden Ansprüche, **dadurch gekennzeichnet, dass** der Schritt des Untersuchens des Verhaltens des elektronischen Objekts (4) die folgenden Schritte umfasst:

- Ermitteln der Positionierung des elektronischen Objekts (4) mit Bezug auf die kommunizierenden Elemente (2),
- Ermitteln der Positionierung des elektronischen Objekts (4) innerhalb des vorgegebenen Koordinatensystems anhand der mit Bezug auf die kommunizierenden Elemente (2) ermittelten Positionierung des elektronischen Objekts (4) und anhand der Positionen der kommunizierenden Elemente (2) in dem vorgegebenen Koordinatensystem zu einem entsprechenden Zeitpunkt des Schritts des Nachverfolgens der Positionierung der kommunizierenden Elemente (2) über die Zeit innerhalb des vorgegebenen Koordinatensystems.

10. Verfahren nach einem der vorhergehenden Ansprüche, **dadurch gekennzeichnet, dass** es einen Schritt des Nachverfolgens der Positionierung des elektronischen Objekts (4) innerhalb des vorgegebenen Koordinatensystems über die Zeit umfasst.

11. Verfahren nach einem der vorhergehenden Ansprüche, **dadurch gekennzeichnet, dass** es einen Schritt des Befüllens mindestens eines Teils des Behälters (1) mit einer Gesamtheit von Materialien, insbesondere Granulat, umfasst.

12. Verfahren nach dem vorhergehenden Anspruch, **dadurch gekennzeichnet, dass** das elektronische Objekt (4) die Form eines Materials der Gesamtheit von Materialien aufweist und vor, nach oder während des Schritts des Befüllens in der Gesamtheit von Materialien angeordnet wird.

13. Verfahren nach einem der Ansprüche 11 oder 12, **dadurch gekennzeichnet, dass** es einen Schritt des Charakterisierens des Zustands der Gesamtheit von Materialien in dem Behälter (1) anhand des Schritts des Untersuchens des Verhaltens des elektronischen Objekts (4) umfasst.

14. Vorrichtung, die zur Umsetzung mindestens des Verfahrens nach einem der vorhergehenden Ansprüche konfiguriert ist, **dadurch gekennzeichnet, dass** sie Folgendes beinhaltet: mindestens ein kommunizierendes Element (2), ein Element zum Ermitteln (5) der Positionierung des kommunizierenden Elements (2), insbesondere mit Bezug auf die Innenoberfläche des Behälters, und ein Element zum Ermitteln (6) der Nachverfolgung der Positionierung jedes kommunizierenden Elements in dem vorgegebenen Koordinatensystem, während sich der Behälter in dem vorgegebenen Koordinatensystem bewegt, und dadurch, dass sie Folgendes umfasst:

- mindestens ein elektronisches Objekt (4), das fähig ist, mit mehreren kommunizierenden Elementen (2) der Vorrichtung zu interagieren, und
- ein Element zum Ermitteln (7) der Positionierung des elektronischen Objekts (4) mit Bezug auf die kommunizierenden Elemente (2) anhand der Interaktion zwischen den kommunizierenden Elementen und dem elektronischen Objekt,
- ein Element zum Ermitteln (8) der Positionierung des elektronischen Objekts (4) in dem vorgegebenen Koordinatensystem anhand von Daten, die aus dem Element zum Ermitteln (7) der Positionierung des elektronischen Objekts (4) mit Bezug auf die kommunizierenden Elemente (2) stammen.

## Claims

1. Method for monitoring at least one electronic object (4), **characterized in that** it comprises a method for instrumenting a container (1), forming a recipient for an assortment of materials configured to mix the assortment of materials, capable of being set moving in a preset coordinate system, wherein it comprises the following steps:

- placing a plurality of communicating elements (2) in the container (1) on an internal surface (3) of the container (1) and determining a position of each of the communicating elements (2) on the internal surface (3) of the container (1), the internal surface (3) of the container delimiting an internal volume having a known geometry, and the step of placing the communicating elements (2) comprising the following steps;

- randomly placing the communicating elements (2) in the container (1), preferably while moving,
- fastening the communicating elements (2) on the internal surface (3) of the container,
- determining, by way of data delivered by the communicating elements (2) and of the known geometry, the position of the various communicating elements (2) relative to the internal surface (3) of the container (1).

- tracking the location of each communicating element (2) over time in the preset coordinate system.

and **characterized in that** it comprises the following complementary steps;

- introducing at least one electronic object (4) into the container (1),
- tracking a behaviour of the at least one electronic object (4) in the container (1), especially while the container (1) is moving in the preset coordinate system, regarding an interaction of the at least one electronic object (4) with each communicating element (2).

2. Method according to the preceding claim, **characterized in that** the placing step of the communicating elements comprises fastening the communicating elements (2) on the internal surface (3) of the container with magnetic attraction between each communicating element (2) and the internal surface (3) of the container (1).

3. Method according to the preceding claim, **characterized in that** the data delivered by the communicating elements (2) correspond to behaviour data determined for the communicating elements (2) and/or to data for determined distance separating the communicating elements (2) once the latter have been fastened to the internal surface (3) of the container (1).

4. Method according to the preceding claim, **characterized in that** it comprises a step of determining behaviour data of the communicating elements (2) by way of at least one of the following sensors equipping each of the communicating elements (2): an accelerometer, a magnetometer, and/or a gyroscope.

5. Method according to one of claims 3 or 4, **characterized in that** it comprises a step of determining distance data by way of distance sensors equipping the communicating elements (2), each communicating element (2) preferably comprises an acoustic sensor and/or an optical sensor forming a distance sensor.

6. Method according to one of claims 3 to 5, **characterized in that** the step of determining the positions (PE) of the communicating elements (2) is implemented by way of a step of applying a calculation function (FC) taking as input: the data determined for the distance (DD) between the communicating elements (2) and/or the behaviour data (DC) determined for the communicating elements (2) and/or a preset list of possible positions (PP) of the communicating elements (2) relative to the internal surface (3) of the container (1) and/or a preset list of possible behaviours (CP) of the communicating elements (2).

7. Method according to the preceding claim, **characterized in that** the calculation function (FC) is a greedy algorithm determining optimal positions for each of the communicating elements (2) from all of said possible positions (PP) and all of said possible behaviours (CP) depending on the behaviour data (DC) determined for the communicating elements (2) and on the distance data (DD) determined between the communicating elements (2).

8. Method according to one of claims 6 or 7, **characterized in that** the calculation function (FC) takes into account a measurement noise associated with the determined distance data (DD) and a measurement noise associated with the determined behaviour data (DC), the calculation function (FC) preferably considers the measurement noises as being additive and Gaussian.

9. Method according to one of the preceding claims, **characterized in that** the step of studying the behaviour of the electronic object (4) comprises the following steps:

   - determining the location of the electronic object (4) relative to the communicating elements (2),
   - determining the location of the electronic object (4) in the preset coordinate system, by way of the location determined for the electronic object (4) relative to the communicating elements (2) and by way of the positions of the communicating elements (2) in the preset coordinate system at a corresponding instant in the step of tracking the location of the communicating elements (2) over time in the preset coordinate system.

10. Method according to one of the preceding claims, **characterized in that** it comprises a step of tracking the location of the electronic object (4) in the preset coordinate system over time.

11. Method according to one of the preceding claims, **characterized in that** it comprises a step of at least partially filling the container (1) with an assortment of materials, preferably aggregate.

12. Method according to the preceding claim, **characterized in that** the electronic object (4) takes the form of one material of the assortment of materials and is placed in the assortment of materials before, after, or during the filling step.

13. Method according to one of claims 11 or 12, **characterized in that** it comprises a step of characterizing the state of the assortment of materials in the container (1) on the basis of the step of studying the behaviour of the electronic object (4).

14. Device configured for implementing at least the method according to one of the preceding claims, **characterized in that** it comprises: at least one communicating element (2), an element (5) for determining the location of the communicating element (2), preferably relative to the internal surface of the container, and an element (6) for determining the tracking of the location of each communicating element in the preset coordinate system when the container is moving in said preset coordinate system, and **in that** it comprises:

   - at least one electronic object (4) capable of interacting with a plurality of communicating elements (2) of the device;
   - an element for determining (7) the location of the electronic object (4) relative to the communicating elements (2) on the basis of the interaction between the communicating elements and the electronic object; and
   - an element for determining (8) the location of the electronic object (4) in the preset coordinate system by way of data delivered by the element for determining (7) the location of the electronic object (4) relative to the communicating elements (2).

FIG.1

FIG.2

FIG.3

FIG.4

FIG.5

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009037026 A

- WO 2011157941 A

**Littérature non-brevet citée dans la description**

- **PIFU ZHANG et al.** Navigation with IMU/GPS/Digital Compass with Unscented Kalman Filter. *Proceedings of the IEEE, International Conférence on Mechatronics & Automation,* Juillet 2005